# EUROPÄISCHE PATENTSCHRIFT

(11) **EP 0 819 648 B1**
(45) Veröffentlichungstag und Bekanntmachung des Hinweises auf die Patenterteilung: **24.04.2002**
(21) Anmeldenummer: 97111081.2
(22) Anmeldetag: 03.07.1997
(51) Int. Cl.: C02F 1/04, B01D 1/00

(54) **Verfahren und Vorrichtung zum Eindampfen von Flüssigkeiten, die aus Wasser und Komponenten aus der Gruppe Salze und suspendierter Partikel bestehen**
Process and apparatus to concentrate liquids, containing water and components from the salts group and particles in suspension
Procédé et dispositif pour concentrer des liquides, contenant de l'eau et des composants du groupe de sels et de particles en suspensions

(30) Priorität: 19.07.1996 DE 19630566; 02.06.1997 DE 19722978
(43) Veröffentlichungstag der Anmeldung: 21.01.1998
(73) Patentinhaber: Schilling, Roland, Dr.-Ing., 50226 Frechen (DE)
(72) Erfinder: Schilling, Hermann, 50226 Frechen (DE)
(74) Vertreter: Zapfe, Hans, Dipl.-Ing.

(56) Entgegenhaltungen:
- DE-U- 9 407 437
- US-A- 2 616 839
- PATENT ABSTRACTS OF JAPAN vol. 012, no. 237 (C-509), 6.Juli 1988 & JP 63 028401 A (SHOWA DENKO KK), 6.Februar 1988,

## Beschreibung

Die Erfindung betrifft ein Verfahren zum Eindampfen von Flüssigkeiten, die aus Wasser und Komponenten aus der Gruppe Salze und suspendierter Partikel bestehen, und zum Abscheiden der besagten Komponenten, wobei die Flüssigkeit in einem Behälter eine freie Oberfläche bildet, die mittels der Strahlung mindestens eines brennstoffbeheizten Infrarotstrahlers und mittels Flammen beheizt wird, die aus Öffnungen des Infrarotstrahlers gegen die freie Oberfläche gerichtet werden und durch Verdampfung Wasserdampf freisetzen.

Dabei können die Salze sowohl gelöst als auch in Form von Keimen und Kristallen vorliegen, also auch ihrerseits suspendierte Partikel bilden. Wichtig ist dabei, daß die Masse zumindest anfänglich fließfähig bzw. pumpfähig ist. Erfindungsgemäß können auch Schlämme eingedampft werden, wofür auch die Begriffe Eindicken bzw. Einengen verwendet werden. Zu betonen ist noch, daß es sich um einen Verdampfungsvorgang handelt, d.h. zumindest an der Oberfläche findet ein Sieden des Wassers statt, und es ist nicht erforderlich, große Mengen an Spülluft einzusetzen, wie es bei den bekannten Verdunstungsverfahren erforderlich ist. Diese Spülluft beeinträchtigt den thermischen Wirkungsgrad, macht große Leitungsquerschnitte erforderlich und belastet entweder die Umwelt oder macht große Gasreinigungsvorrichtungen erforderlich.

Bei einer bekannten Methode der genannten Art (Verdampfungskristallisation) wird das Schmutzwasser in einem Umlaufverdampfer unter Anlegung eines Vakuums mehrstufig verdampft. Die Neigung zu Verschmutzungen und zu Krusten- und Schaumbildung sowie eine daraus resultierende geringe Verfügbarkeit verbunden mit der Erzeugung eines flüssigen Rückstandes (Konzentrat) sind die Ergebnisse aus der ersten Verdampferstufe. In einer zweiten Stufe wird in einem Dünnschichtverdampfer oder Wirbelschichttrockner der in der ersten Stufe erzeugte flüssige Rückstand zum festen Rückstand aufkonzentriert, auskristallisiert oder getrocknet. Die Gesamtverfügbarkeit dieser bekannten Methode liegt bei etwa 50 - 70 %.

Es geht insbesondere um die Reinigung von schadstoffbelastetem Prozeßwasser durch Abtrennung und anschließende Kristallisation hochtoxischer, biologisch nicht abbaubarer Inhaltsstoffe aus dem Wasser. Es werden dabei gelöste und ungelöste Stoffe, wie auch Salze kontinuierlich aus dem Schmutzwasser gewonnen. Dies geschieht durch Verdampfung in einer dünnen Oberflächenschicht durch Infrarotstrahlen einer vorgegebenen Wellenlänge, welche mit einem Brenngas erzeugt werden, und anschließende Kristallisation.

Ein solches Verfahren und eine Vorrichtung sind durch das DE 94 07 437.2 U bekannt. Beide werden jedoch diskontinuierlich bzw. chargenweise betrieben, so daß die Produktivität entsprechend gering ist; die entwässerten Feststoffe müssen in längeren Zeitabständen nach Betriebsunterbrechung durch Kratzen bzw. Schaben aus einer flachen Wanne entfernt werden.

Durch den Aufsatz von Roland Schilling "Abwasserentsorgung durch thermische Behandlung", veröffentlicht in der Zeitschrift WAP, 5/1992, Seiten 251 bis 253 ist ein diskontinuierliches Verfahren bekannt, bei dem mehrere Pfannen mit flachen Böden durch Heißluft und durch Wärmestrahlung von oben beheizt und durch einen automatischen Zulauf auf einem bestimmten Füllstand gehalten werden. Dadurch sammelt sich auf den Böden der Pfannen zunehmend mehr Feststoff (Salz) an, der in längeren Zeitabständen von beispielsweise einer Woche mit der Mutterlauge von oben her abgesaugt und durch ein Filter von der Mutterlauge getrennt wird. Der Vorgang kommt also von selbst zum Stillstand, und es muß ein Ausräumen der Pfannen erfolgen, das jedoch erst nach dem Abkühlen der Salzsole auf Raumtemperatur erfolgen soll.

Der Erfindung liegt daher die Aufgabe zugrunde, ein solches Verfahren bzw. eine solche Vorrichtung dahingehend zu verbessern, daß ein kontinuierlicher oder quasi-kontinuierlicher Betrieb - auch in großtechnischem Maßstab - bei geringem Energieverbrauch möglich ist.

Die Lösung der gestellten Aufgabe erfolgt bei dem eingangs angegebenen Verfahren erfindungsgemäß dadurch, daß
a) Flüssigkeit (3) mit durch die Verdampfung erhöhter Konzentration der besagten Komponenten und von oben nach unten abnehmender Temperatur in einem im wesentlichen konstanten Volumen ständig aus dem Bodenbereich (1a) des Behälters abgezogen und einer weiteren Trennung von Wasser und Komponenten zugeführt wird, und daß
b) die durch Infrarotstrahlung und Flammen beheizte freie Oberfläche (13) der Flüssigkeit (3) durch laufende Zufuhr frischer Flüssigkeit in den Behälter (1) in einem zumindest im wesentlichen konstanten Abstand "h" vom Infrarotstrahler (4) und dessen Austrittsöffnungen (11) für die Flammen gehalten wird.

Der Ausdruck "laufend" bedeutet dabei entweder kontinuierlich oder quasi-kontinuierlich, d.h. auch durch portionsweise Beschickung mit frischer Flüssigkeit und durch portionsweisen Abzug der eingeengten und/oder eingedickten Flüssigkeit, ggf. bereits mit größeren Anteilen an suspendierten Partikeln wie Kristallkeimen, Kristallen und/oder unlöslichen Feststoffpartikeln, die mit Restwasser eine fließfähige oder pumpfähige Masse bilden. Spülluft wird hierbei nicht benötigt; die Flammengase besorgen die Abfuhr des Wasserdampfes bei kleinstmöglichem Energieverbrauch.

Die Erfindung vermeidet die Nachteile der bekannten Methode und erzeugt in einer Apparatur in kontinuierlicher oder quasi-kontinuierlicher Weise aus dem Schmutzwasser einen festen Rückstand in Form eines Kristallisates oder Schlammes und schließlich in Form eines weitgehend entwässerten Rückstandes. Es ist dabei besonders vorteilhaft, wenn entweder einzeln oder in Kombination:
- die Infrarotstrahlung und die Flammen in einem durch ein Gehäuse und ein Flüssigkeitsschloß gebildeten Raum eingeschlossen gehalten werden, wobei das Flüssigkeitsschloß in die Flüssigkeit eintaucht und in dieser die freie Oberfläche abgrenzt, und wenn die Atmosphäre aus Brenngasen und Wasserdampf aus dem Raum abgesaugt wird,
- frische Flüssigkeit innerhalb des Flüssigkeitsschlosses in den Raum unterhalb der freien Oberfläche eingespeist wird,
- die Flüssigkeit mit von oben nach unten abnehmender Temperatur und zunehmender Konzentration der Komponenten in einem Volumen gehalten wird, dessen Querschnitt von oben nach unten abnimmt,
- eingedickte bzw. eingeengte Flüssigkeit und ggf. suspendierte Partikel mittels einer Pumpe ständig aus dem Bodenbereich des Behälters abgezogen und einer Verdunsterpfanne zugeführt werden, die durch Verlustwärme des Infrarotstrahlers beheizt wird,
- eingedickte Flüssigkeit und suspendierte Partikel mittels einer Pumpe ständig aus dem Bodenbereich des Behälters abgezogen und einem Filter zugeführt werden, in dem die suspendierten Partikel zurückgehalten werden und aus dem die partikelfreie Flüssigkeit in den Bodenbereich des Behälters zurückgeführt wird,
- der Infrarotstrahler über einen Verdichter mit einer einstellbaren Menge an Verbrennungsluft versorgt wird und wenn die nicht zur Verbrennung benötigte Luftmenge als Treibgas einer Strahlpumpe zugeführt wird, die die Atmosphäre aus Brenngasen und Wasserdampf aus dem Raum über der freien Oberfläche absaugt,
- die Verbrennungsluft durch die Äußere Oberfläche des Behälters vorgewärmt wird, und wenn
- der Abstand "h" des Infrarotstrahlers (4) von der Oberfläche (13) zwischen 100 mm und 400 mm, vorzugsweise zwischen 150 mm und 350 mm gewählt wird.

Die Erfindung betrifft auch eine Vorrichtung zum Eindampfen von Flüssigkeiten, die aus Wasser und Komponenten aus der Gruppe Salze und suspendierter Partikel bestehen, und zum Abscheiden der besagten Komponenten, mit einem Behälter, in dem die Flüssigkeit eine freie Oberfläche bildet, über der mindestens ein brennstoffbeheizter Infrarotstrahler mit Öffnungen für einen Flammenaustritt gegen die freie Oberfläche angeordnet ist, und mit einem Abzug für das Gemisch aus Flammengasen und durch Verdampfung freigesetztem Wasserdampf.

Zur Lösung der gleichen Aufgabe ist eine solche Vorrichtung erfindungsgemäß dadurch gekennzeichnet, daß
a) die Vorrichtung an einen Einlauf (2) für die laufende Zufuhr weiterer Flüssigkeit (3) zur weitgehenden Konstanthaltung des Abstandes "h" der Oberfläche (13) vom Infrarotstrahler (4) und seinen Öffnungen (11) für den Flammenaustritt angeschlossen ist und daß
b) der Behälter (1) in seinem Bodenbereich (1a) einen Ablauf (25) aufweist, der an eine Einrichtung (Verdunsterpfanne 27, Filter 27a) zur weiteren Trennung von Wasser und den besagten Komponenten angeschlossen ist.

Im Zuge weiterer Ausgestaltungen der Vorrichtung ist es besonders vorteilhaft, wenn entweder einzeln oder in Kombination:
- über der Oberfläche ein Raum abgegrenzt ist, in dem die Infrarotstrahlung und die Flammen einschließbar sind, wobei der Raum durch ein Gehäuse und ein Flüssigkeitsschloß gebildet ist, das zum Zwecke der Abgrenzung der freien Oberfläche in die Flüssigkeit eintauchbar ist, und wenn der Raum an eine Absaugvorrichtung angeschlossen ist,
- in den Raum ein Einlauf für frische Flüssigkeit einmündet,
- der Querschnitt des Behälters von oben nach unten abnimmt, z.B. in Form eines auf dem Kopf stehenden Hausdaches, insbesondere wenn die Wandung des Behälters als Hohlkegel ausgebildet ist,
- der Ablauf des Behälters mit einem Filter verbunden ist, durch den die suspendierten Partikel abtrennbar sind und aus dem die partikelfreie Flüssigkeit in den Bodenbereich des Behälters zurückführbar ist,
- der Infrarotstrahler an einen Verdichter mit einem Regelventil für Verbrennungsluft angeschlossen ist, und wenn der Verdichter über eine Zweigleitung mit einem weiteren Regelventil an eine Strahlpumpe angeschlossen ist, durch die die Atmosphäre aus Brenngasen und Wasserdampf aus dem Raum über der freien Oberfläche absaugbar ist,
- der Behälter mit einem Doppelmantel für die Vorwärmung der Verbrennungsluft versehen ist,
- die Innenwandung des Behälters mit einem Schaber für die Abfuhr von Ablagerungen in Richtung auf den Ablauf im Bodenbereich versehen ist,
- der Abstand "h" des Infrarotstrahlers von der Oberfläche des konstruktiven Spiegels der Flüssigkeit zwischen 100 mm und 400 mm, vorzugsweise zwischen 150 mm und 360 mm beträgt, und wenn schließlich:
- das Flüssigkeitsschloß auf dem Umfang ringförmig geschlossen und gegenüber dem Gehäuse in der Höhe verstellbar ausgebildet ist.

Behälter, Infrarotstrahler, Gehäuse und Flüssigkeitsschloß können dabei einen rotationssymmetrischen Grundriß bzw. Querschnitt aufweisen; sie können aber auch einen polygonalen, insbesondere aber rechteckigen oder quadratischen Grundriß besitzen, und es können über dem Flüssigkeitsspiegel auch mehrere Infrarotstrahler in einer Reihen- und/oder Flächenanordnung angebracht sein, wenn es sich um besonders große Behälter handelt.

Ein Ausführungsbeispiel und seine Wirkungsweise werden nachfolgend anhand einer Prinzipdarstellung näher erläutert, die einen Vertikalschnitt durch eine Eindampf- und Kristallisationsvorrichtung zeigt:

Die Vorrichtung besitzt einen konischen Behälter 1, in dem sich eine einzudampfende Flüssigkeit 3 der eingangs beschriebenen Zusammensetzung befindet, die eine freie Oberfläche 13 bildet. Durch einen Einlauf 2 gelangt weitere Flüssigkeit auf die Oberfläche 13, über der ein Infrarotstrahler 4 angeordnet ist. Dieser ist konzentrisch von einem Gehäuse 5 umgeben, das über Konsolen 6 und Stützen 7 getragen wird. Der Infrarotstrahler 4 ist mit einer Brennstoffzuführung 8 versehen, in deren Umgebung eine Luftzuführung 9 mündet. Die Brennstoffzuführung 8 und die Luftzuführung 9 münden in ein Turbo-Mischrohr 10, unter dem sich eine Brennerplatte 12 mit einer Vielzahl von Öffnungen 11 befindet. Die Brennerplatte 12 besteht aus einem temperaturbeständigen Material, das bevorzugt zur Emission von mittelwelliger Infrarotstrahlung angeregt werden kann. Durch die Einwirkung dieser Infrarotstrahlung auf die Oberfläche 13 wird eine Verdampfung bewirkt, da sich an der Oberfläche 13 von selbst die Siedetemperatur der Flüssigkeit 3 einstellt. Der Abstand zwischen dem Infrarotstrahler 4 und der Oberfläche 13 liegt zwischen 150 und 350 mm.

Über einen Filter 16 wird Außenluft angesaugt, gereinigt, auf eine nachstehend noch näher beschriebene Weise vorgewärmt und einem Verdichter 14 zugeführt, der die vorgewärmte Luft nicht nur der Luftzuführung 9, sondern auch einer Strahlpumpe 15 zuführt. Aus den Öffnungen 11 des Infrarotstrahlers 4 treten Flammen aus, die mit hoher Geschwindigkeit senkrecht auf die Oberfläche 13 auftreffen und sich dort mit aufsteigendem Brüdendampf vermischen. Dadurch entsteht ein Volumenstrom 17 aus Verbrennungsgasen (Rauchgas) und Dampf (Brüden) innerhalb des Gehäuses 5, und dieser Volumenstrom 17 wird durch die Wirkung der Strahlpumpe 15 unter leichtem Unterdruck aus dem Gehäuse abgesaugt. Durch ein sogenanntes Flüssigkeitsschloß 18, das gasdicht, aber verstellbar mit dem Gehäuse 5 verbunden ist und mit seinem unteren Rand in die Flüssigkeit 3 eintaucht, wird über der Oberfläche 13 ein Unterdruck gehalten. Eine Seitenwand 19 führt den Gasvolumenstrom 17 von der Oberfläche 13 gemeinsam mit dem auf diese auftreffenden Rauchgas über die Strahlpumpe 15 ab. Dabei verteilen zwei Regelventile 20 und 21 die von dem Verdichter 14 angelieferte Luft in einem vorgegebenen Verhältnis auf den Infrarotstrahler 4 einerseits und die Strahlpumpe 15 andererseits.

Der Behälter 1 ist bis zu einem konstruktiv vorgegebenen Füllstand 22 mit der Flüssigkeit 3 gefüllt und von einem Kühlmantel 23 umgeben, der sich nach unten bis zur Spitze des konischen Behälters 1 erstreckt, d.h. bis zum Bodenbereich 1a des Behälters 1. An diesen Bodenbereich ist über einen Ablauf 25 eine Pumpe 26 angeschlossen, deren Druckseite über eine Leitung 26a mit einer Verdunsterpfanne 27 verbunden ist. Deren Boden 27b bildet die obere Verschlußwand des Gehäuses 5 und wird durch die Verlustwärme des Infrarotstrahlers 4 beheizt. Alternativ oder additiv kann die Pumpe 26 über eine Leitung 26b mit einem Filter 27a verbunden sein, der die Feststoffe auffängt und die Flüssigkeit über eine Leitung 26c zum Bodenbereich 1a des Behälters 1 durchläßt, und zwar entweder hydrostatisch oder durch eine Pumpe.

Die Verdunsterpfanne 27 ist mit einem Füllstandsbegrenzer 28 versehen, der eine Überfüllung verhindert und ggf. die Pumpe 26 abschaltet. Die Abgabe der Verlustwärme des Infrarotstrahlers 4 an die Verdunsterpfanne 27 wird durch konvektive Wärmeübertragung ermöglicht, wobei eine laminare Strömung durch Öffnungen 29 und 30 aufrechterhalten werden kann.

Der Filter 16 für die Luft ist außerhalb einer Gebäudewand 32 in freier Umgebung angebracht und über eine Leitung 31 mit dem Kühlmantel 23 verbunden. Vom oberen Rand dieses Kühlmantels 23 führt eine Rohrleitung 33 zu dem bereits beschriebenen Verdichter 14. Der Gasaustritt der Strahlpumpe 15 ist über eine Leitung 34 mit der Außenatmosphäre jenseits der Gebäudewand 32 verbunden. Ggf. wird die Rohrleitung 34 mit einer Abgas-Aufbereitungsanlage verbunden.

Das Flüssigkeitsschloß 18 wird durch eine Tauchverlängerung 35 gebildet, die aus einem Dichtband 36 besteht, das eine Rohrschelle 37 aufweist. Durch Lösen der Rohrschelle 37 kann die Tauchverlängerung 35 mit ihrem waagerechten unteren Rand nach oben oder unten verschoben werden. Nach dem Ausbau der Tauchverlängerung 35 kann der Behälter 1 auch verschoben werden.

Um ggf. Ablagerungen entfernen zu können, die sich auf der Innenwand des Behälters 1 bilden, ist ein Schaber 40 vorgesehen, der an einem Schaberhalter 39 befestigt ist. Dieser besitzt am oberen Ende einen Distanzhalter und einen Griff 42, und am unteren Ende ein Fußlager 41, das sich auf einer Fußlagerplatte 38 abstützt. Durch ggf. mehrfache Umdrehungen des Schabers 40 um eine Mittenachse A des Behälters 1 werden die Ablagerungen von der Innenwandung des Behälters 1 abgelöst und dem Bodenbereich 1a zugeführt.

Mit der vorstehend beschriebenen Vorrichtung läßt sich folgendes Betriebsverfahren durchführen.

Mit entsprechender Steuerung oder Regelung wird kurz unterhalb der Oberfläche 13 die Flüssigkeit 3 durch den Einlauf 2 in den Behälter 1 gepumpt, und die weitere Zufuhr der Flüssigkeit wird bei Erreichen des Füllstandes 22 abgeschaltet. Durch den Infrarotstrahler 4 verdampft in einer dünnen Schicht von 0,1 bis 1 mm an der Oberfläche 13 in einer vorgegebenen Zeit Wasser, wobei der Füllstand 22 entsprechend der Verdampfungsmenge stetig absinkt. Lediglich an der Oberfläche 13 sind kleine Dampfblasen zu erkennen, im übrigen befindet sich die Flüssigkeit im Behälter 1 in Ruhe. Unterhalb der Oberfläche 13 fällt die Temperatur aufgrund des Absorptionseffekts der Flüssigkeit 3 sehr schnell von deren Siedetemperatur bis auf etwa 20 bis 40 °C ab. Durch die blasenarme Verdampfung der Flüssigkeit 3 an deren Oberfläche 13 in nahezu ruhender Lösung tritt eine starke Übersättigung einer gelösten Komponente der Flüssigkeit 3 ein.

Nach Ablauf einer bestimmten Zeit oder ggf. durch kontinuierliche Regelung wird der durch die Verdampfung verringerte Füllstand 22 mit neuer Flüssigkeit 3 wieder bis auf den vorgegebenen ursprünglichen Füllstand aufgefüllt.

Die im Wasser gelöste Komponente fällt bzw. kristallisiert in Form von vielen kleinen Keimen aus. Bei organischen Verbindungen können Koagulationseffekte auftreten: Durch thermische Einwirkung bei gleichzeitiger Anwesenheit von beispielsweise Eisen-Verbindungen werden Ladungsträger, z.B. durch partielle Wasserverdampfung, thermisch und chemisch zerstört, und die sich bildenden organischen Stoffe ballen sich zusammen bzw. vergrößern sich solange, bis sie aufgrund ihres hohen spezifischen Gewichts nach unten als Klumpen in den Bodenbereich 1a absinken. Die vorstehend beschriebenen Eisen-Verbindungen können auch daher rühren, daß der Behälter 1 aus Stahl besteht. Durch eine Oxidation des Eisens ist auch eine Reduktion von Chrom-VI-Ionen zu Chrom-lll-lonen möglich.

Durch die Sedimentation der spezifisch schweren Keime und Klumpen in die tiefen, kälteren Schichten der Flüssigkeit 3 kühlen sich die Keime und Klumpen weiter ab. Makroskopisch gesehen befindet sich die Flüssigkeit im Innern des Behälters 1 in Ruhe. Es tritt lediglich eine leichte laminare Strömung der Flüssigkeit in Folge von Dichteänderungen und Abkühlung durch Abgabe der Kristallisationswärme bei gleichzeitiger Verarmung der Flüssigkeit an gelösten Komponenten nach unten auf.

Die Feststoffsuspension sinkt unter weiterer Abkühlung durch den Kühlmantel 23 nach unten bis in die Spitze bzw. den Bodenbereich 1a des Behälters 1. Der Feststoff- bzw. Kristallbrei 24 wird aus dem Ablauf 25 abgepumpt und entweder auf die bereits beschriebene Weise in die Verdunsterpfanne 27 gefördert oder in den Filter 27a, aus dem die Mutterlauge wieder über die Leitung 26c in den Behälter 1 zurückgeführt wird, vorzugsweise in dessen Bodenbereich 1a.

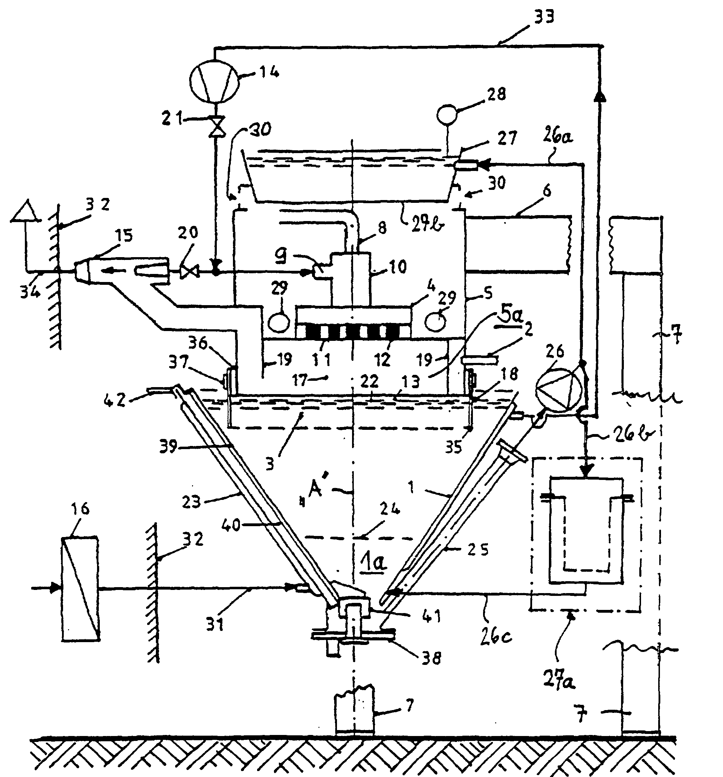

Die Kühlung der Flüssigkeit 3 geschieht über den bereits beschriebenen Kühlmantel 23, wobei sich die zur Kühlung verwendete Luft erwärmt, so daß der thermische Wirkungsgrad der gesamten Vorrichtung entscheidend verbessert wird. Sämtliche Vorgänge spielen sich dabei in ein und derselben Vorrichtung nach der Figur ab.

In der Verdunsterpfanne 27 findet dann in ruhender Lösung bei Temperaturen zwischen 40 und 80 °C über den Wasserentzug durch Verdunstung eine weitere Kristallisation bzw. Eindickung statt.

Die Regelung des Verbrennungsvorgangs des Infrarotstrahlers 4 kann dadurch geschehen, daß man die Luftzuführung 9 mittels einer Impulsleitung über eine Membrane mit der Brennstoffzuführung 8 verbindet. Ein hier nicht gezeigtes By-Pass-Ventil in der Impulsleitung ändert die Brennstoffmenge. Durch eine Infrarotkamera kann das Emissionsspektrum der erzeugten Infrarotstrahlung überwacht und mittels des By-Pass-Regelventils die vorgegebene Wellenlänge des Infrarotstrahlers 4 geregelt werden. Zur optimalen Einstellung des Infrarotstrahlers 4 hinsichtlich der Abgaszusammensetzung und des Wellenlängenspektrums kann ein Rauchgasmeßgerät verwendet werden, wie es beispielsweise Kaminkehrer benutzen. Es ist dabei wichtig, daß das Wellenlängenspektrum der Infrarotstrahlung an das Absorptionsverhalten der Flüssigkeit angepaßt wird. Die Flüssigkeit ist im Bodenbereich 1a des Behälters 1 hochkonzentriert bis übersättigt, soweit es eine Lösung betrifft, bzw. schlammig, wenn es sich um Feststoff-Suspensionen handelt. Ein wichtiges Kriterium ist dabei die Pumpfähigkeit der Masse. Wichtig ist dabei weiterhin, daß für die erfindungsgemäße Vorrichtung keine Spülluft benötigt wird, so daß der Verbrennungsvorgang sehr zuverlässig aufgrund einer Analyse der Abgase bestimmt werden kann, die bei stöchiometrischer Einstellung des Verbrennungsvorgangs lediglich aus Kohlendioxid, Stickstoff und Wasserdampf bestehen.

Brennstoffbeheizte Infrarotstrahler der vorstehend beschriebenen Art sind - für sich genommen - im Handel. Von Bedeutung hinsichtlich der Verfahrensführung ist jedoch, daß die Infrarotstrahler an der Unterseite der Brennerplatte 12 mit Temperaturen betrieben werden, die zwischen 700 und 1100 °C liegen, bei gegebenem Werkstoff der Brennerplatte, also in einem Wellenlängenbereich zwischen 2978 nm bis 2110 nm. Als besonders geeignet hierfür haben sich Brennerplatten mit metallischen Komponenten erwiesen, wobei durch den Brennerbetrieb die Temperaturen an der Unterseite in dem genannten Bereich liegen, während die Oberseite der Brennerplatte Temperaturen aufweist, die deutlich niedriger sind und beispielsweise etwa 150 °C betragen. Die gesamte Energiekonzentration findet dabei zwischen der Brennerplatte und der Oberfläche der Flüssigkeit statt, und diese Energiekonzentration wird zusätzlich durch den Einschluß innerhalb des Raumes 5a begünstigt.

## Patentansprüche

1. Verfahren zum Eindampfen von Flüssigkeiten (3), die aus Wasser und Komponenten aus der Gruppe Salze und suspendierter Partikel bestehen, und zum Abscheiden der besagten Komponenten, wobei die Flüssigkeit (3) in einem Behälter eine freie Oberfläche (13) bildet, die mittels der Strahlung mindestens eines brennstoffbeheizten Infrarotstrahlers (4) und mittels Flammen beheizt wird, die aus öffnungen (11) des Infrarotstrahlers (4) gegen die freie Oberfläche (13) gerichtet werden und durch Verdampfung Wasserdampf freisetzen,
**dadurch gekennzeichnet, daß**
a) Flüssigkeit (3) mit durch die Verdampfung erhöhter Konzentration der besagten Komponenten und von oben nach unten abnehmender Temperatur in einem im wesentlichen konstanten Volumen ständig aus dem Bodenbereich (1a) des Behälters abgezogen und einer weiteren Trennung von Wasser und Komponenten zugeführt wird, und daß
b) die durch Infrarotstrahlung und Flammen beheizte freie Oberfläche (13) der Flüssigkeit (3) durch laufende Zufuhr frischer Flüssigkeit in den Behälter (1) in einem zumindest im wesentlichen konstanten Abstand "h" vom Infrarotstrahler (4) und dessen Austrittsöffnungen (11) für die Flammen gehalten wird.

2. Verfahren nach Anspruch 1, **dadurch gekennzeichnet, daß** die Infrarotstrahlung und die Flammen in einem durch ein Gehäuse (5) und ein Flüssigkeitsschloß (18) gebildeten Raum (5a) eingeschlossen gehalten werden, wobei das Flüssigkeitsschloß (18) in die Flüssigkeit (3) eintaucht und in dieser die freie Oberfläche (13) abgrenzt, und daß die Atmosphäre aus Brenngasen und Wasserdampf aus dem Raum (5a) abgesaugt wird.

3. Verfahren nach Anspruch 2, **dadurch gekennzeichnet, daß** frische Flüssigkeit (3) innerhalb des Flüssigkeitsschlosses (187) in den Raum (5a) oberhalb der freien Oberfläche (13) eingespeist wird.

4. Verfahren nach Anspruch 1, **dadurch gekennzeichnet, daß** die Flüssigkeit (3) in einem Volumen gehalten wird, dessen Querschnitt von oben nach unten abnimmt.

5. Verfahren nach Anspruch 1, **dadurch gekennzeichnet, daß** eingedickte bzw. eingeengte Flüssigkeit (3) und ggf. suspendierte Partikel mittels einer Pumpe (26) ständig aus dem Bodenbereich (1a) des Behälters (1) abgezogen und einer Verdunsterpfanne (27) zugeführt werden, die durch Verlustwärme des Infrarotstrahlers (4) beheizt wird.

6. Verfahren nach Anspruch 1, **dadurch gekennzeichnet, daß** eingedickte Flüssigkeit (3) und suspendierte Partikel mittels einer Pumpe (26) ständig aus dem Bodenbereich (1a) des Behälters (1) abgezogen und einem Filter (27a) zugeführt werden, in dem die suspendierten Partikel zurückgehalten werden und aus dem die partikelfreie Flüssigkeit (3) in den Bodenbereich (1a) des Behälters (1) zurückgeführt wird.

7. Verfahren nach Anspruch 2, **dadurch gekennzeichnet, daß** der Infrarotstrahler (4) über einen Verdichter (14) mit einer einstellbaren Menge an Verbrennungsluft versorgt wird und daß die nicht zur Verbrennung benötigte Luftmenge als Treibgas einer Strahlpumpe (15) zugeführt wird, die die Atmoshäre aus Brenngasen und Wasserdampf aus dem Raum (5a) über der freien Oberfläche (13) absaugt.

8. Verfahren nach Anspruch 7, **dadurch gekennzeichnet, daß** die Verbrennungsluft durch die äußere Oberfläche des Behälters (1) vorgewärmt wird.

9. Verfahren nach Anspruch 1, **dadurch gekennzeichnet, daß** der Abstand "h" des Infrarotstrahlers (4) von der Oberfläche (13) zwischen 100 mm und 400 mm, vorzugsweise zwischen 150 mm und 350 mm gewählt wird.

10. Vorrichtung zum Eindampfen von Flüssigkeiten (3), die aus Wasser und Komponenten aus der Gruppe Salze und suspendierter Partikel bestehen, und zum Abscheiden der besagten Komponenten, mit einem Behälter (1), in dem die Flüssigkeit (3) eine freie Oberfläche (13) bildet, über der ein brennstoffbeheizter Infrarotstrahler (4) mit öffnungen (11) für einen Flammenaustritt gegen die freie Oberfläche (13) angeordnet ist, und mit einem Abzug für das Gemisch aus Flammengasen und durch Verdampfung freigesetztem Wasserdampf,
**dadurch gekennzeichnet, daß**
a) die Vorrichtung an einen Einlauf (2) für die laufende Zufuhr weiterer Flüssigkeit (3) zur weitgehenden Konstanthaltung des Abstandes "h" der Oberfläche (13) vom Infrarotstrahler (4) und seinen Öffnungen (11) für den Flammenaustritt angeschlossen ist und daß
b) der Behälter (1) in seinem Bodenbereich (1a) einen Ablauf (25) aufweist, der an eine Einrichtung (Verdunsterpfanne 27, Filter 27a) zur weiteren Trennung von Wasser und den besagten Komponenten angeschlossen ist.

11. Vorrichtung nach Anspruch 10, **dadurch gekennzeichnet, daß** über der Oberfläche (13) ein Raum (5a) abgegrenzt ist, in dem die Infrarotstrahlung und die Flammen einschließbar sind, wobei der Raum (5a) durch ein Gehäuse (5) und ein Flüssigkeitsschloß (18) gebildet ist, das zum Zwecke der Abgrenzung der freien Oberfläche (13) in die Flüssigkeit (3) eintauchbar ist, und daß der Raum (5a) an eine Absaugevorrichtung (15) angeschlossen ist.

12. Vorrichtung nach Anspruch 11, **dadurch gekennzeichnet, daß** der Einlauf (2) für frische Flüssigkeit (3) in den Raum (5a) einmündet.

13. Vorrichtung nach nach Anspruch 10, **dadurch gekennzeichnet, daß** der Querschnitt des Behälters (1) von oben nach unten abnimmt.

14. Vorrichtung nach Anspruch 13, **dadurch gekennzeichnet, daß** die Wandung des Behälters (1) als Hohlkegel ausgebildet ist.

15. Vorrichtung nach Anspruch 10, **dadurch gekennzeichnet, daß** der Ablauf (25) des Behälters (1) über eine Pumpe (26) mit einer Verdunsterpfanne (27) verbunden ist, die durch Verlustwärme des Infrarotstrahlers (4) beheizbar ist.

16. Vorrichtung nach Anspruch 10, **dadurch gekennzeichnet, daß** der Ablauf (25) des Behälters (1) mit einem Filter (27a) verbunden ist, durch den die suspendierten Partikel abtrennbar sind und aus dem die partikelfreie Flüssigkeit (3) in den Bodenbereich (1a) des Behälters (1) zurückführbar ist.

17. Vorrichtung nach Anspruch 10, **dadurch gekennzeichnet, daß** der Infrarotstrahler (4) an einen Verdichter (14) mit einem Regelventil (21) für Verbrennungsluft angeschlossen ist, und daß der Verdichter (14) über eine Zweigleitung mit einem weiteren Regelventil (20) an eine Strahlpumpe (15) angeschlossen ist, durch die die Atmosphäre aus Brenngasen und Wasserdampf aus dem Raum (5a) über der freien Oberfläche (13) absaugbar ist.

18. Vorrichtung nach Anspruch 10, **dadurch gekennzeichnet, daß** der Behälter (1) mit einem Doppelmantel (23) für die Vorwärmung der Verbrennungsluft versehen ist.

19. Vorrichtung nach Anspruch 10, **dadurch gekennzeichnet, daß** die Innenwandung des Behälters (1) mit einem Schaber (40) für die Abfuhr von Ablagerungen in Richtung auf den Ablauf (25) im Bodenbereich (1a) versehen ist.

20. Vorrichtung nach Anspruch 10, **dadurch gekennzeichnet, daß** der Abstand "h" des Infrarotstrahlers (4) von der Oberfläche (13) des konstruktiven Spiegels der Flüssigkeit (3) zwischen 100 mm und 400 mm, vorzugsweise zwischen 150 mm und 350 mm beträgt.

21. Vorrichtung nach Anspruch 10, **dadurch gekennzeichnet, daß** das Flüssigkeitsschloß (18) als auf dem Umfang geschlossener Ring ausgebildet und gegenüber dem Gehäuse (5) in der Höhe verstellbar ist.

## Claims

1. Process for concentrating liquids (3) composed of water and components of the salts group and suspended particles, and for separating said components, and the liquid (3) forms in a container a free surface (13) which is heated by means of radiation of at least one fuel-heated infrared radiator (4) and by means of flames which are directed from openings (11) of the infrared radiator (4) towards the free surface (13) and release water steam by way of evaporation, **characterised in that**
a: liquid (3) with increased concentration of said components due to evaporation and with a temperature which increases from top to bottom is at an essentially constant volume continuously drawn from the bottom area (1a) of the container and delivered for further separation of water and components; and
b: the free surface (13) of the liquid (3) which is heated by infrared radiation and flames is held by continuous feeding of fresh liquid into the container (1) at an at least essentially constant distance "h" from the infrared radiator (4) and its outlet openings (11) for the flames.

2. Process according to Claim 1, **characterised in that** the infrared radiation and the flames are kept locked into a space (5a) formed by housing (5) and a liquid closure (18), and the liquid closures immerses into the liquid (3) where it defines the free surface (13), and the atmosphere of fuel gases and water steam is vacuumed from the space (5a).

3. Process according to Claim 2, **characterised in that** fresh liquid (3) is within the liquid closure (18) fed into the area (5a) above the free surface (13).

4. Process according to Claim 1, **characterised in that** the liquid (3) is held at a volume the cross-section of which reduces from top towards the bottom.

5. Process according to Claim 1, **characterised in that** the thickened or concentrated liquid (3) and, if appropriate, suspended particles are by means of a pump (26) continuously drawn off the base area (1a) of the container (1) and fed to an evaporating pan (27) which is heated by waste heat of the infrared radiator (4).

6. Process according to Claim 1, **characterised in that** thickened liquid (3) and suspended particles are by means of a pump (26) continuously drawn off the base area (1a) of the container (1) and fed to a filter (27a) wherein the suspended particles are kept back and from where particle-free liquid (3) is fed back into the base area (1a) of the container (1).

7. Process according to Claim 2, **characterised in that** the infrared radiator (4) is via a compressor (14) supplied with an adjustable volume of combustion air, and an air volume which is not required for combustion is fed as fuel gas to a jet pump (15) which vacuums off the atmosphere of fuel gases and water steam from the area (5a) via the free surface (13).

8. Process according to Claim 7, **characterised in that** the combustion air is preheated by the outer surface of the container (1).

9. Process according to Claim 1, **characterised in that** the distance "h" of the infrared radiator (4) from the surface (13 is chosen between 100 mm and 400 mm, preferably between 150 mm and 350 mm.

10. Device for concentrating liquids (3) which are composed of water and components of the salts group and suspended particles, and for separating said components, comprising a container (1) in which the liquid (3) forms a free surface (13) above which is arranged a combustion fuel heated infrared radiator (4) with openings (11) for a flame outlet towards the free surface (13), and with an extraction for the mixture of flame gases and water steam released by evaporation, **characterised in that**
a: the device is connected to an inlet (2) for continuous delivery of additional liquid (3) in order to keep distance "h" between the surface (13) and infrared radiator (4) and its openings (11) for the flame outlet substantially constant; and
b: the container (1) has in its bottom area (1a) a drain (25) which is for the purpose of further separation of water and said components connected to a device (evaporator pan 27, filter 27a).

11. Device according to Claim 10, **characterised in that** above the surface (13) is defined an area (5a) into which the infrared radiation and the flames can be locked, and the area (5a) is formed by a housing (5) and a liquid closure (18) which is, for the purpose of defining the free surface (13), immersible into the liquid (3), and the area (5a) is connected to a vacuum device (15).

12. Device according to Claim 11, **characterised in that** the inlet (2) for fresh liquid (3) terminates in the area (5a).

13. Device according to Claim 10, **characterised in that** the cross-section of the container reduces from top to bottom.

14. Device according to Claim 13, **characterised in that** the wall of the container (1) is designed as a hollow cone.

15. Device according to Claim 10, **characterised in that** the drain (25) of the container (1) is connected via a pump (26) to an evaporator pan (27) which is heated by waste heat of the infrared radiator (4).

16. Device according to Claim 10, **characterised in that** the drain (25) of the container (1) is connected to a filter (27a) by means of which the suspended particles can be separated and from where particle-free liquid (3) can be fed back into the base area (1a) of the container (1).

17. Device according to Claim 10, **characterised in that** the infrared radiator (4) is connected to a compressor (14) with a regulating valve (21) for combustion air, and the compressor (14) is via a branch pipe connected to an additional regulating valve (20) to a jet pump (15) through which the atmosphere of fuel gases and water vapour are vacuum off the area (5a) via the free surface (13).

18. Device according to Claim 10, **characterised in that** the container (1) is provided with a double casing (23) for preheating the combustion air.

19. Device according to Claim 10, **characterised in that** the inside wall of the container (1) is provided with a scraper (40) for removal of deposits in the direction of the drain (25) in the bottom area (1a).

20. Device according to Claim 10, **characterised in that** the distance "h" between the infrared radiator (4) and the surface (13) of the constructive mirror of the liquid (3) lies between 100 mm and 400 mm, preferably between 150 mm and 350 mm.

21. Device according to Claim 10, **characterised in that** the liquid closure (18) is designed as a peripherally closed ring and is height-adjustable relative to housing 5.

## Revendications

1. Procédé pour concentrer des liquides (3) contenant de l'eau et des composants du groupe des sels et des particules en suspension, et pour séparer lesdits composants, dans lequel le liquide (3) forme une surface libre (13) dans un conteneur, qui est chauffé au moyen du rayonnement d'au moins un dispositif de rayonnement infrarouge (4) chauffant un combustible et au moyen de flammes qui sont dirigées contre la surface libre (13) hors des ouvertures (11) du dispositif de rayonnement infrarouge (4) et dégagent de la vapeur d'eau par évaporation, **caractérisé en ce que**
a) le liquide (3) est ôté en permanence dans la zone inférieure (1a) du conteneur avec une concentration desdits composants augmentée par l'évaporation et avec une température diminuant du haut vers le bas selon un volume essentiellement constant et est amené à une séparation ultérieure de l'eau et des composants, et que
b) la surface libre (13) du liquide (3) chauffée par le rayonnement infrarouge et les flammes est maintenue par une amenée circulant de liquide frais dans le conteneur (1) à une distance "h" au moins essentiellement constante du dispositif de rayonnement infrarouge (4) et de ses ouvertures de sortie (11) pour les flammes

2. Procédé selon la revendication 1, **caractérisé en ce que** le rayonnement infrarouge et les flammes sont maintenus enfermés dans un espace (5a) formé par un boîtier (5) et un tablier pour liquide (18), le tablier pour liquide (18) étant plongé dans le liquide (3) et limitant dans celui-ci la surface libre (13), et **en ce qu'**on aspire hors de l'espace (5a) l'atmosphère des gaz combustibles et de la vapeur d'eau

3. Procédé selon la revendication 2, **caractérisé en ce que** du liquide frais (3) est amené à l'intérieur du tablier de liquide (18) dans l'espace (5a) au-dessus de la surface libre (13).

4. Procédé selon la revendication 1, **caractérisé en ce que** le liquide (3) est maintenu dans un volume dont la section transversale diminue du haut vers le bas.

5. Procédé selon la revendication 1, **caractérisé en ce que** le liquide (3) concentré, respectivement rétréci, et éventuellement les particules en suspension, sont soutirés au moyen d'une pompe (26) en permanence hors de la zone inférieure (1a) du conteneur (1) et sont amenés à une cuve de vaporisation (27) qui est chauffée par la chaleur perdue du dispositif du rayonnement infrarouge (4).

6. Procédé selon la revendication 1, **caractérisé en ce que** le liquide (3) concentré et les particules en suspension sont soutirés en permanence au moyen d'une pompe (26) hors de la zone inférieure (1a) du conteneur (1) et sont amenés à un filtre (27a) dans lequel les particules en suspension sont retenues et hors duquel le liquide (3) exempt de particules est renvoyé dans la zone inférieure (1a) du conteneur (1).

7. Procédé selon la revendication 2, **caractérisé en ce que** le dispositif de rayonnement infrarouge (4) est prévu sur un condenseur (14) avec une quantité réglable d'air de combustion et que la quantité d'air non utilisée pour la combustion est amenée comme gaz d'entraînement d'une pompe à jet de vapeur (15) qui aspire l'atmosphère des gaz combustibles et de la vapeur d'eau hors de l'espace (5a) au-dessus de la surface libre (13).

8. Procédé selon la revendication 7, **caractérisé en ce que** l'air de combustion est préchauffé par surface externe du conteneur (1).

9. Procédé selon la revendication 1, **caractérisé en ce qu'**on choisit la distance "h" du dispositif de rayonnement infrarouge (4) de la surface (13) entre 100 mm et 400 mm, de préférence entre 150 mm et 350 mm.

10. Dispositif pour concentrer des liquides (3) contenant de l'eau et des composants du groupe des sels et des particules en suspension, et pour séparer lesdits composants, comprenant un conteneur (1) dans lequel le liquide (3) forme une surface libre (13), sur laquelle est placé un dispositif de rayonnement infrarouge (4) chauffant un combustible avec des ouvertures (11) pour la sortie de flamme contre la surface libre (13) et avec une sortie pour le mélange de gaz de flammes et de la vapeur d'eau libérée par la vaporisation,
**caractérisé en ce que**
a) le dispositif est relié à une entrée (2) pour l'amenée en continu d'un autre liquide (3) pour le maintien large constant de la distance "h" de la surface (13) du dispositif de rayonnement infrarouge (4) et de ses ouvertures (11) pour la sortie des flammes et que
b) le conteneur (1) présente dans sa zone inférieure (1a) une sortie (25) qui est reliée sur une installation (cuve de vaporisation 27, filtre 27a) pour une séparation supplémentaire de l'eau et desdits composants.

11. Dispositif selon la revendication 10, **caractérisé en ce que** sur la surface (13) est délimité un espace (5a) dans lequel le rayonnement infrarouge et les flammes peuvent être enfermés, l'espace (5a) étant formé par un boîtier (5) et un tablier pour liquide (18) qui peut être plongé dans le liquide (3) dans le but de séparer la surface libre (13) et que l'espace (5a) est relié à un dispositif d'aspiration (15).

12. Dispositif selon la revendication 11, **caractérisé en ce que** l'entrée (2) pour le liquide frais (3) débouche dans l'espace (5a).

13. Dispositif selon la revendication 10, **caractérisé en ce que** la section transversale du conteneur (1) diminue du haut vers le bas.

14. Dispositif selon la revendication 13, **caractérisé en ce que** la paroi du conteneur (1) est construite comme un cône creux.

15. Dispositif selon la revendication 10, **caractérisé en ce que** la sortie (25) du conteneur (1) est relié via une pompe (26) avec une cuve de vaporisation (27) qui peut être chauffée par la chaleur perdue du dispositif de rayonnement infrarouge (4).

16. Dispositif selon la revendication 10, **caractérisé en ce que** la sortie (25) du conteneur (1) est relié à un filtre (27a) par lequel les particules en suspension peuvent être séparées et hors duquel le liquide (3) exempt des particules est renvoyé dans la zone inférieure (1a) du conteneur (1).

17. Dispositif selon la revendication 10, **caractérisé en ce que** le dispositif de rayonnement infrarouge (4) est relié à un compresseur (14) avec une soupape de réglage (21) pour l'air de combustion et **en ce que** le compresseur (14) est relié à une pompe à jet de vapeur (15), via une conduite de dérivation avec une autre soupape de réglage (20), à travers laquelle l'atmosphère de gaz combustibles et la vapeur d'eau peut être aspirée hors de l'espace (5a) au-dessus de la surface libre (13).

18. Dispositif selon la revendication 10, **caractérisé en ce que** le conteneur (1) est prévu avec une enveloppe double (23) pour le préchauffage de l'air de combustion.

19. Dispositif selon la revendication 10, **caractérisé en ce que** la paroi interne du conteneur (1) est prévue avec un racloir (40) pour l'évacuation des dépôts en direction sur l'écoulement (25) dans la zone du fond (1a).

20. Dispositif selon la revendication 10, **caractérisé en ce que** la distance "h" du dispositif de rayonnement infrarouge (4) de la surface (13) du miroir constructif du liquide (3) est entre 100 mm et 400 mm, de préférence entre 150 mm et 350 mm.

21. Dispositif selon la revendication 10, **caractérisé en ce que** le tablier pour liquide (18) est formé sur la périphérie d'un anneau fermant et peut être déplacé en hauteur par rapport au boîtier (5).
